# EUROPÄISCHE PATENTSCHRIFT

(11) **EP 0 819 074 B1**
(45) Veröffentlichungstag und Bekanntmachung des Hinweises auf die Patenterteilung: **31.07.2002**
(21) Anmeldenummer: 96934581.8
(22) Anmeldetag: 09.10.1996
(51) Int. Cl.: B60T 7/06, B60R 21/09

(54) **EINRICHTUNG ZUR BETÄTIGUNG EINES DRUCKGEBERS**
DEVICE FOR ACTUATING A PRESSURE TRANSMITTER
DISPOSITIF D'ACTIONNEMENT D'UN TRANSMETTEUR DE PRESSION

(30) Priorität: 12.10.1995 DE 19537964
(43) Veröffentlichungstag der Anmeldung: 21.01.1998
(73) Patentinhaber: Continental Teves AG & Co. oHG, 60488 Frankfurt (DE)
(72) Erfinder: GRAICHEN, Kai-Michael, D-63225 Langen (DE); KIRCHER, Dieter, D-61118 Bad Vilbel (DE); RIETH, Peter, D-65343 Eltville (DE); SAALBACH, Kurt, D-64546 Mörfelden-Walldorf (DE); MATTHEIS, Lothar, D-60388 Frankfurt am Main (DE); SCHONLAU, Jürgen, D-65396 Walluf (DE)
(86) Internationale Anmeldenummer: EP9604367
(87) Internationale Veröffentlichungsnummer: WO9713666

(56) Entgegenhaltungen:
- FR-A- 2 706 399
- FR-A- 2 715 368

## Beschreibung

Die vorliegende Erfindung betrifft eine Einrichtung zur Betätigung eines Bremsdruckgebers für Kraftfahrzeuge, bestehend aus einem schwenkbar angeordneten Betätigungspedal sowie einer Betätigungsstange, die zweiteilig ausgebildet ist und aus zwei teleskopartig ineinander geführten, in kraftübertragender Verbindung miteinander stehenden Teilen besteht.

Aus der FR 2 611 284 ist eine Einrichtung zum Verbinden eines Bremspedals mit einem pneumatischen Bremskraftverstärker bekannt, dessen Betätigungsstange zweiteilig ausgebildet ist. Der erste Teil der Betätigungsstange, der der Betätigung des Steuerventils des Bremskraftverstärkers dient, weist einen radialen Kragen auf, an dem sich der zweite Teil axial abstützt, der rohrfötmig ausgebildet ist, einen Abschnitt des ersten Teiles aufnimmt und am Bremspedal angelenkt ist. Weniger vorteilhaft ist bei der vorbekannten Einrichtung die Gefahr anzusehen, daß insbesondere bei Unfällen, die zu Verformungen des Kraftfahrzeug-Vorderteiles führen, das Bremspedal mit der Betätigungsstange so weit in den Raum vor dem Fahrer hineindringt, daß erhebliche Verletzungen des Fahrers zu befürchten sind.

Aus der französischen Anmeldung FR 2706 399 ist eine Pedale bekannt, die auf eine Servobremse einwirkt. Das Drehlager der Pedale ist mit einer Sicherungscheibe gesichert, die mit einem umgelenkten Kabel in Verbindung steht. In Bedarfsfalle werden durch Explosivkraft derart Kräfte auf das Kabel ausgeübt, dass die Sicherungscheibe aus dem Lager entfernt wird. Damit ist der Pedalhebel von der Servobremse getrennt, so daß eine durch einen Umfall verursachte Bewegung der Servobremse in Richtung auf den Fahrer hin nicht zu einer entsprechenden Schwenkbewegung der Pedale führen kann. Bei dieser Konstruktion wird ein Nachteil darin gesehen dass das Lager der Pedale im Crashfall zerstört wird. Die Führung des Kabels benötigt zusätzlich noch einigen Raum.

Aus der DE 37 41 881 A1 ist weiterhin eine Anordnung bekannt, die bei einem Auffahrunfall auftretende Schwenkbewegungen von an einem Pedalträger angeordneten Betätigungspedalen ver-hindert und darüber hinaus eine Vergrößerung des Fußraumes sicherstellt. Zu diesem Zweck sind sämtliche Halterungen des Pedalträgers an der Spritzwand bei einem Auffahrunfall selbsttätig lösend ausgebildet und der Pedalträger deckt eine über die Projektion der Pedale hinausragende Öffnung in der Spritzwand ab, so daß er unter der Wirkung der auf ihn wirkenden Trägheitskräfte frei in den Motorraum ausweichen kann.

Ein Nachteil dieser bekannten Anordnung ist darin zu sehen, daß im Vorderteil bzw. im Motorraum des Kraftfahrzeuges ein Freiraum vorgesehen sein muß, der aus heutiger Sicht in der Zukunft immer begrenzter wird. Außerdem stellt die vorbekannte Anordnung eine relativ aufwendige Kontruktion mit hohem Gewicht dar, bei der gewährleistet sein muß, daß kein unbeab-sichtigtes Lösen des Pedalwerkes erfolgt.

Der Erfindung liegt daher die Aufgabe zugrunde, eine Einrichtung zur Betätigung eines Bremsdruckgebers der eingangs genannten Gattung vorzuschlagen, bei der auf eine platzsparende Art unter Verwendung von möglichst geringem Aufwand und Gewicht die Gefahr einer Fuß- bzw. Knieverletzung weitgehend eliminiert wird.

Eine erste Lösung der der Erfindung zugrunde liegenden Aufgabe wird erfindungsgemäß dadurch gelöst,daß zwischen den beiden Teilen ein Verriegelungsmechanismus vorgesehen ist, der durch das Steuersignal eines Crashsensors lösbar ist und dessen Lösen eine Verkürzung der Baulänge der Betätigungsstange ermöglicht.

Vorteilhafte Weiterbildungen des Erfindungsgegenstandes sind in den Unteransprüchen 2 bis 6 sowie 9 bis 11 aufgeführt.

Eine zweite Lösung der vorhin erwähnten Aufgabe besteht darin, daß das Betätigungspedal durch zwei mittels einer Gelenkverbindung miteinander verbundene Teile gebildet ist und die Betätigungsstange an dem ersten, an einer Karosseriewand bzw. einem mit der Karosseriewand starr verbundenen Träger drehbar gelagerten Teil angelenkt ist, und daß eine mit dem zweiten Teil im Bereich der Betätigungskraftübertragung mittels einer zweiten Gelenkverbindung verbundene Zugstrebe vorgesehen ist, deren anderes Ende entlang einer mit dem ersten Teil starr verbundenen Führung durch Zünden eines Sprengsatzes verschiebbar ist.

Die Erfindung wird im nachfolgenden Text anhand von drei Ausführungsbeispielen im Zusammenhang mit der beiliegenden Zeichnung näher erläutert. In der Zeichnung zeigt:
- Fig. 1: eine Ausführung der ersten erfindungsgemäßen Einrichtung, teilweise weggebrochen;
- Fig. 2: den Entriegelungsvorgang bei dem in Fig. 1 zwischen den beiden Teilen der Betätigungsstange wirkenden elektromechanischen Verriegelungsmechanismus;
- Fig. 3: eine zweite Ausführung der ersten erfindungsgemäßen Einrichtung in schematischer Darstellung; und
- Fig. 4: eine zweite Einrichtung nach der Erfindung in schematischer Darstellung.

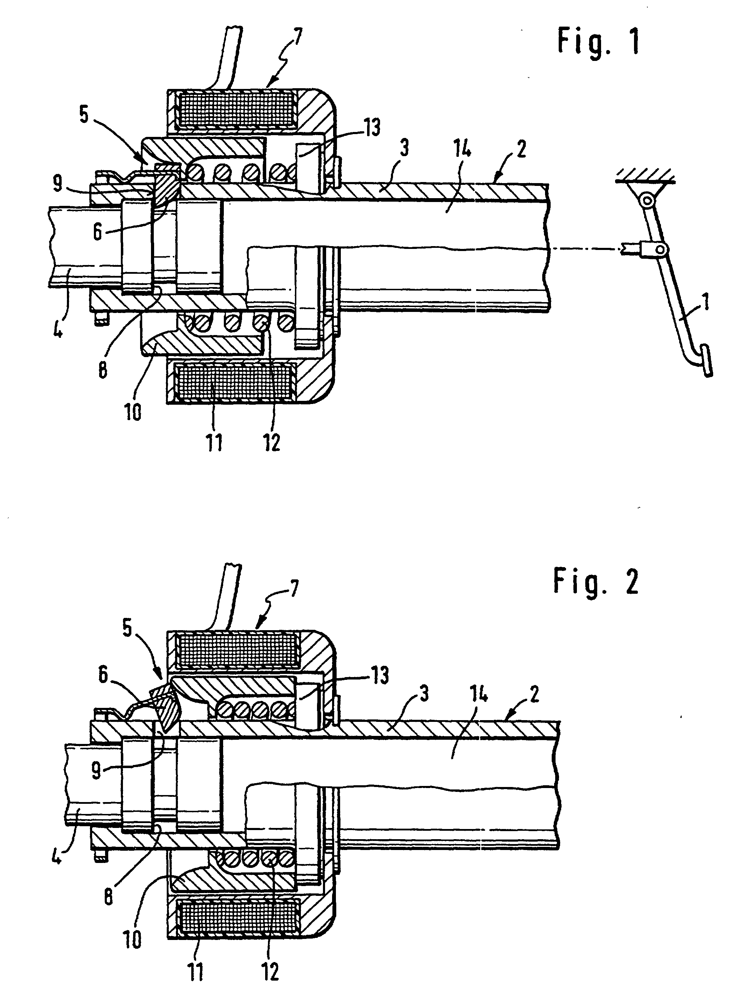

Die in Fig. 1 und 2 gezeigte Einrichtung zur Betätigung eines nicht dargestellten Bremsdruckgebers einer hydraulischen Bremsanlage für Kraftfahrzeuge besteht im wesentlichen aus einem durch Fahrerfußkraft betätigbaren Betätigungspedal 1 sowie einer Betätigungsstange 2, durch die das Steuerventil eines pneumatischen oder hydraulischen Kraftverstärkers oder ein Kolben eines hydraulischen Hauptbremszylinders oder eines Kupplungsgeberzylinders, betätigbar sind. Die Betätigungsstange 2 ist dabei vorzugsweise zweiteilig ausgebildet und besteht aus einem mit dem Betätigungspedal 1 verbundenen ersten Teil 3 größeren Durchmessers sowie einem zweiten Teil 4, der im ersten Teil 3 teleskopartig geführt ist und der z. B. der Betätigung des Steuerventils eines nicht gezeigten pneumatischen Bremskraftverstärkers dient. Zwischen den beiden Teilen 3, 4 der Betätigungsstange 2 ist ein elektromechanischer Verriegelungsmechanismus vorgesehen, der mit dem Bezugszeichen 5 versehen ist. Der Verriegelungsmechanismus 5, der der Übertragung von am Betätigungspedal 1 eingeleiteten Kräften auf den zweiten Teil 4 dient, sorgt im stromlosen Zustand für einen formschlüssigen Eingriff zwischen den beiden Teilen 3, 4 und besteht vorzugsweise aus einem Elektromagneten 7 sowie einer in eine Radialnut 8 des zweiten Teiles 4 hineinragende Sperrklinke 6, die sich radial durch eine im ersten Teil 3 ausgebildete Ausnehmung 9 hindurcher-streckt und die beiden Teile 3, 4 im Eingriff hält. Eine zwischen einer am ersten Teil 3 vorgesehenen Abstützfläche 13 und dem hülsenförmigen Anker 10 des Elektromagneten 7 ange-ordnete Druckfeder 12 spannt den Anker 10 so vor, daß er axial an der Sperrklinke 6 anliegt und diese radial umgreift, so daß auf diese Art eine formschlüssige Verbindung zwischen den beiden Teilen 3, 4 zustande kommt. Bei einem Unfall wird ein nicht gezeigter Crash-Sensor, beispielsweise ein Airbag-Sensor, aktiviert, der ein Bestromen der Elektromagnetspule 11 bewirkt. Dadurch wird der Anker 10 des Elektromagneten 7 in der Zeichnung (Fig. 2) gegen die Wirkung der Druckfeder 12 nach rechts verschoben und gibt somit die sonst radial nach außen vorgespannte Sperrklinke 6 frei, so daß die formschlüssige Verbindung zwischen den beiden Teilen 3, 4 gelöst wird und der zweite (4) in den ersten Teil 3 hineingeschoben werden kann. Dabei ist es sinnvoll, wenn Mittel vorgesehen sind, die ein kontrolliertes Entweichen der Luft aus dem im ersten Teil 3 vom zweiten Teil 4 begrenzten Raum 14 ermöglichen und die beispielsweise durch eine im ersten Teil 3 ausgebildete, nicht gezeigte Drosselbohrung oder durch einen im zweiten Teil 4 vorgesehenen Drosselkanal gebildet sind. Unter Umständen kann zwischen den Teilen 3, 4 auch eine nicht gezeigte Druckfeder angeordnet sein, die bei irrtümlicher Auslösung des Verriegelungsmechanismus 5 die beiden Teile 3, 4 in ihre ursprüngliche Ausgangslage zurückbringt.

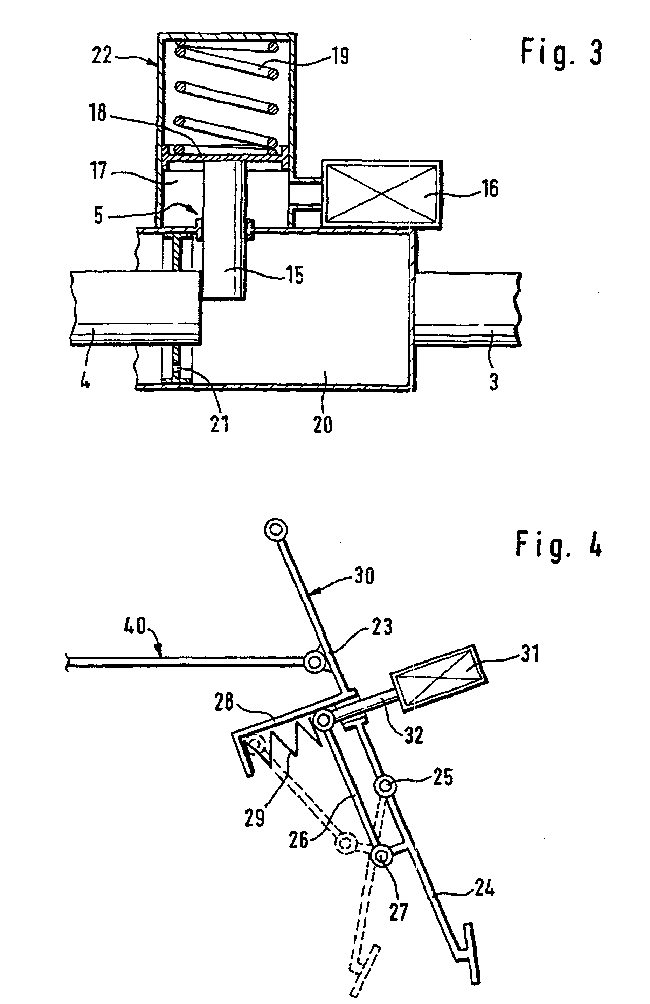

Bei der in Fig. 3 gezeigten zweiten Ausführung des Erfindungsgegenstandes ist der vorhin erwähnte, zwischen den beiden Teilen 3, 4 der Betätigungsstange 2 wirkende Verriegelungsmechanismus 5 durch ein senkrecht zur Achse der Betätigungsstange 2 verschiebbares Verriegelungselement 15 gebildet, an dem der zweite Teil 4 sich axial abstützt. Das durch eine Druckfeder 19 vorgespannte Verriegelungselement 15 steht in Verbindung mit einem pneumatischen Kolben 18, der in einem lediglich angedeuteten, am ersten Teil 3 angebrachten Gehäuse 22 einen pneumatischen Druckraum 17 begrenzt, in dem durch Zünden eines Sprengsatzes 16 eine schlagartige Druckerhöhung erreichbar ist. Durch die Wirkung der entstehenden Druckwelle wird der Kolben 18 gegen die von der Druckfeder 19 aufgebrachten Kraft verschoben, wodurch der zweite Teil 4 freigegeben wird und in Richtung auf das nicht gezeigte Betätigungspedal zu verstellt werden kann. Um eine wirksame Dämpfung der Bewegung des zweiten Teiles 4 zu realisieren ist dieser vorzugsweise als ein pneumatischer Kolben ausgebildet, der im ersten Teil 3 eine pneumatische Kammer 20 begrenzt, die über eine im Kolben angedeutete Drosselbohrung 21 mit der Atmosphäre in Verbindung steht. Die ein kontrolliertes Entweichen der Luft aus der Kammer 20 ermöglichende Drosselbohrung kann selbstverständlich auch im ersten Teil 3 vorgesehen sein. Um eine Fail-Safe-Funktion der in Fig. 1 und 3 dargestellten Ausführungen zu realisieren ist der in einem Crash-Fall vom ersten Teil 3 zurückgelegte Leerweg so bemessen, daß er einer Hälfte des sonst möglichen Betätigungspedalweges entspricht.

Fig. 4 zeigt schließlich eine zweite crashsichere Einrichtung zur Betätigung eines Bremsdruckgebers nach der Erfindung. Das darin lediglich schematisch angedeutete Betätigungs- bzw. Bremspedal 1 besteht aus einem an einer Karosseriewand bzw. einem mit der Karosseriewand starr verbundenen Träger schwenkbar gelagerten ersten Teil 23 sowie einem mit dem ersten Teil 23 mittels einer Gelenkverbindung 25 begrenzt drehbar verbundenen zweiten Teil 24. Mit dem ersten Teil 23, an dem die Betätigungsstange 40 angelenkt ist, ist eine Führung 28 starr verbunden, an der ein Ende einer Zugstrebe 26 verschiebbar geführt ist, deren anderes Ende mittels einer zweiten Gelenkverbindung 27 am zweiten Teil 24, vorzugsweise im Bereich der Übertragung der Betätigungskraft, angeschlossen ist. Das der Führung 28 zugeordnete Ende der Zugstrebe 26 wirkt unter Vorspannung einer Druckfeder 29 mit einem Kraftabgabeglied 32 eines Sprengsatzes 31 zusammen, der durch das Steuersignal eines Crash-Sensors zündbar ist. Durch Zünden des Sprengsatzes 31 wird das Ende der Zugstrebe 26 gegen die Kraft der Druckfeder 29 entlang der Führung 28 verschoben, so daß der untere Teil 24 des Betätigungspedals 30 über die zweite Gelenkverbindung 27 mitgenommen und in die in Fig. 4 gestrichelt dargestellte Lage gedreht wird. Der vom unteren bzw. zweiten Teil 24 des Betätigungspedals 30 zurückgelegte (Knick-)Weg entspricht dabei vorzugsweise der Hälfte des sonst möglichen Betätigungsweges.

## Patentansprüche

1. Einrichtung zur Betätigung eines Bremsdruckgebers für Kraftfahrzeuge, bestehend aus einem schwenkbar angeordneten Betätigungspedal (1,24) sowie einer Betätigungsstange (4,24), die zweiteilig ausgebildet ist und aus zwei teleskopartig ineinander geführten, in kraftübertragender Verbindung miteienander stehenden Teilen (3 bzw. 4) besteht, **dadurch gekennzeichnet, daß** zwischen den beiden Teilen (3,4) ein Verriegelungsmechanismus (5) vorgesehen ist, der durch das Steuersignal eines Crashsensors lösbar ist und dessen Lösen eine Verkürzung der Baulänge der Betätigungsstange (2) ermöglicht.

2. Einrichtung nach Anspruch 1 **dadurch gekennzeichnet, daß** der Verriegelungsmechanismus (5) elektromechanisch betätigbar ist und durch eine in den beiden Teilen (3,4) vorgesehene Ausnehmungen (8,9) hineingreifende Sperrklinke (6) gebildet ist, die durch Aktivierung eines Elektromagneten (7) außer Eingriff mit den beiden Teilen (3,4) bringbar ist.

3. Einrichtung nach Anspruch 2 **dadurch gekennzeichnet, daß** die Sperrklinke (6) auf dem zweiten Teil (4) radial vorgespannt im Eingriff mit den beiden Teilen (3,4) durch Zusammenwirken mit dem hülsenförmig gestalteten Anker (10) des Elektromagneten (7) so gehalten wird, daß ein Verschieben des Ankers (10) ein Lösen der kraftübertragenden Verbindung zwischen den beiden Teilen (3,4) und somit deren Ineinanderschieben ermöglicht.

4. Einrichtung nach Anspruch 1 **dadurch gekennzeichnet, daß** der Verriegelungsmechanismus (5) durch Zünden eines Sprengsatzes (16) betätigbar ist und durch ein Verriegelungselement (15) gebildet ist, an dem der erste Teil (3) der Betätigungsstange (2) axial so abgestützt ist, daß ein Entfernen des Verriegelungselementes (15) aus dem Abstützbereich des ersten Teiles (3) ein Lösen der kraftübertragenden Verbindung zwischen den beiden Teilen (3,4) und somit deren Ineinanderschieben ermöglicht.

5. Einrichtung nach Anspruch 4 **dadurch gekennzeichnet, daß** das Verriegelungselement (15) mit einem einen pneumatischen Druckraum (17) begrenzenden, mittels einer Druckfeder (19) vorgespannten Kolben (18) zusammenwirkt, der durch einen durch Zünden des Sprengsatzes (16) bedingten Druckaufbau im pneumatischen Druckraum (17) entgegen der von der Druckfeder (19) aufgebrachten Kraft verschiebbar ist.

6. Einrichtung nach einem der vorhergehenden Ansprüche **dadurch gekennzeichnet, daß** der erste Teil (3) als pneumatischer Kolben ausgebildet und im zweiten Teil (4) eine pneumatische Kammer (20) begrenzt, wobei eine Drosselstelle (21) vorgesehen ist, die bei einer Relativbewegung der beiden Teile (3,4) zueinander ein gedämpftes Entweichen der Luft aus der Kammer (20) ermöglicht.

7. Einrichtung zur Betätigung eines Bremsdruckgebers für Kraftfahrzeuge, bestehend aus einem schwenkbar angeordneten Betätigungspedal sowie einer daran angelenkten Betätigungsstange,**dadurch gekennzeichnet, daß** das Betätigungspedal (30) durch zwei mittels einer Gelenkverbindung (25) miteinander verbundene Teile (23,24) gebildet ist und die Betätigungsstange (40) an dem ersten, drehbar gelagerten Teil (23) angelenkt ist, daß eine mit dem zweiten Teil (24) im Bereich der Betätigungskraftübertragung mittels einer zweiten Gelenkverbindung (27) verbundene Zugstrebe (26) vorgesehen ist, deren anderes Ende entlang einer mit dem ersten Teil (23) starr verbundenen Führung (28) durch Zünden eines Sprengsatzes (31) verschiebbar ist.

8. Einrichtung nach Anspruch 7 **dadurch gekennzeichnet, daß** das Ende der Zugstrebe (26) gegen die Kraft einer Druckfeder (29) verschiebbar ist.

9. Bremsanlage, mit einem Bremsdruckgeber und einer Einrichtung zur Betätigung des Bremsdruckgebers nach einem der Ansprüche 1 bis 8,**dadurch gekennzeichnet, dass** der Bremsdruckgeber ein pneumatischer Bremskraftverstärker ist.

10. Bremsanlage, mit einem Bremsdruckgeber und einer Einrichtung zur Betätigung des Bremsdruckgebers nach einem der Ansprüche 1 bis 8,**dadurch gekennzeichnet , daß** der Bremsdruckkgeber ein hydraulischer Bremskraftverstärker ist.

11. Bremsanlage, mit einem Bremsdruckgeber und einer Einrichtung zur Betätigung des Bremsdruckgebers nach einem der Ansprüche 1 bis 8,**dadurch gekennzeichnet , daß** der Bremsdruckgeber ein hydraulischer Hauptbremszylinder ist.

12. Bremsanlage, mit einem Bremsdruckgeber und einer Einrichtung zur Betätigung des Bremsdruckgebers nach einem der Ansprüche 1 bis 8,**dadurch gekennzeichnet , daß** der Bremsdruckgeber ein hydraulischer Kupplungsgeberzylinder ist.

## Claims

1. Device for actuating a brake pressure generator for automotive vehicles, comprised of a swivellingly arranged actuating pedal (1, 24) and an actuating rod (4, 24) which has a bipartite design and is composed of two parts (3 and 4) which are guided telescopically in one another and are in a force-transmitting connection with each other,
**characterized in that** a locking mechanism (5) is provided between the two parts (3, 4) which is adapted to be released by the control signal of a crash sensor, and the said's release permits shortening the overall length of the actuating rod (2).

2. Device as claimed in claim 1,
**characterized in that** the locking mechanism (5) is electromechanically actuatable and provided by a pawl (6) which engages recesses (8, 9) shaped in the two parts (3, 4) and is movable to disengage from the said two parts (3, 4) by activation of an electromagnet (7).

3. Device as claimed in claim 2,
**characterized in that** the pawl (6) on the second part (4) is retained in a radially biassed manner in engagement with the two parts (3, 4) by interaction with the sleeve-shaped armature (10) of the electromagnet (7) in such a way that a displacement of the armature (10) allows detachment of the force-transmitting connection between the two parts (3, 4) and, thus, said's telescoping movement.

4. Device as claimed in claim 1,
**characterized in that** the locking mechanism (5) is actuatable by igniting a bursting charge (16) and is provided by a locking element (15) on which the first part (3) of the actuating rod (2) is axially supported in such a way that a removal of the locking element (15) from the supporting area of the first part (3) allows detachment of the force-transmitting connection between the two parts (3, 4).and, thus, said's telescoping movement.

5. Device as claimed in claim 4,
**characterized in that** the locking element (15) interacts with a piston (18) which bounds a pneumatic pressure chamber (17) and is biassed by a compression spring (19), the said piston being slidable, due to a pressure build-up in the pneumatic pressure chamber (17) that is produced by igniting the bursting charge (16), in opposition to the force generated by the compression spring (19).

6. Device as claimed in any one of the preceding claims,
**characterized in that** the first part (3) is configured as a pneumatic piston and bounds a pneumatic chamber (20) in the second part (4), and a restrictor (21) is provided which allows a damped escape of the air out of the chamber (20) when the two parts (3, 4) execute a relative movement to each other.

7. Device for actuating a brake pressure generator for automotive vehicles, comprised of a swivellingly arranged actuating pedal and an actuating rod articulated thereat,
**characterized in that** the actuating pedal (30) is formed of two parts (23, 24) interconnected by means of a hinge connection (25), and the actuating rod (40) is articulated at the first pivoted part (23), **in that** there is a hinged tie bar (26) which is connected to the second part (24) in the area of the actuating force transmission by means of a second hinge connection (27), the other end of the said hinged tie bar being slidable along a guide (28) that is rigidly connected to the first part (23), by igniting a bursting charge (31).

8. Device as claimed in claim 7,
**characterized in that** the end of the hinged tie bar (26) is displaceable in opposition to the force of a compression spring (29).

9. Brake system including a brake pressure generator and a device for actuating the brake pressure generator as claimed in any one of claims 1 to 8,
**characterized in that** the brake pressure generator is a pneumatic brake booster.

10. Brake system including a brake pressure generator and a device for actuating the brake pressure generator as claimed in any one of claims 1 to 8,
**characterized in that** the brake pressure generator is a hydraulic brake booster.

11. Brake system including a brake pressure generator and a device for actuating the brake pressure generator as claimed in any one of claims 1 to 8,
**characterized in that** the brake pressure generator is a hydraulic master brake cylinder.

12. Brake system including a brake pressure generator and a device for actuating the brake pressure generator as claimed in any one of claims 1 to 8,
**characterized in that** the brake pressure generator is a hydraulic clutch master cylinder.

## Revendications

1. Dispositif d'actionnement d'un générateur de pression de frein pour véhicule automobile, constitué d'une pédale d'actionnement (1, 24) disposée de façon à pouvoir basculer et d'une tige d'actionnement (4, 24) qui est réalisée en deux parties et est constituée de deux parties (respectivement 3 et 4) qui sont guidées d'une manière télescopique l'une dans l'autre et se trouvent reliées entre elles de façon à transmettre des forces, **caractérisé en ce qu'**entre les deux parties (3, 4), il est prévu un mécanisme de verrouillage (5) qui peut être libéré au moyen du signal de commande d'un détecteur de collision et dont la libération permet un raccourcissement de la longueur structurelle de la tige d'actionnement (2).

2. Dispositif suivant la revendication 1, **caractérisé en ce que** le mécanisme de verrouillage (5) peut être actionné par la voie électromécanique et est constitué d'un cliquet d'arrêt (6) qui vient en prise dans des évidements (8, 9) prévus dans les deux parties (3, 4) et qui peut être mis hors de prise avec les deux parties (3, 4) au moyen de l'activation d'un électro-aimant (7).

3. Dispositif suivant la revendication 2, **caractérisé en ce qu'**en étant soumis à une précontrainte radiale sur la seconde partie (4), le cliquet d'arrêt (6) est maintenu en prise avec les deux parties (3, 4) au moyen d'une coopération avec l'armature mobile (10), réalisée en forme de manchon, de l'électro-aimant (7), d'une manière telle qu'un déplacement en translation de l'armature mobile (10) permet une libération de la liaison, transmettant les forces, entre les deux parties (3, 4) et donc le déplacement en translation de l'une de celles-ci dans l'autre.

4. Dispositif suivant la revendication 1, **caractérisé en ce que** le mécanisme de verrouillage (5) peut être actionné au moyen de l'amorçage d'une charge explosive (16) et est constitué d'un élément de verrouillage (15) sur lequel la première partie (3) de la tige d'actionnement (2) prend appui axialement, d'une manière telle que le fait d'éloigner l'élément de verrouillage (15) à partir de la zone d'appui de la première partie (3) permet une libération de la liaison transmettant les forces entre les deux parties (3, 4) et donc un déplacement en translation de l'une de celles-ci dans l'autre.

5. Dispositif suivant la revendication 4, **caractérisé en ce que** l'élément de verrouillage (15) coopère avec un piston (18) qui délimite une chambre de pression pneumatique (17) et est soumis à une précontrainte au moyen d'un ressort de compression (19) et qui peut être déplacé en translation au moyen d'un établissement de pression, dans la chambre de pression pneumatique (17), dû à l'amorçage de la charge explosive (16), à l'encontre de la force exercée par le ressort de compression (19).

6. Dispositif suivant l'une des revendications précédentes, **caractérisé en ce que** la première partie (3) est réalisée sous forme d'un piston pneumatique et délimite une chambre pneumatique (20) dans la seconde partie (4), tandis qu'il est prévu un emplacement d'étranglement (21) qui, lors d'un déplacement relatif des deux parties (3, 4) l'une vis-à-vis de l'autre, permet un échappement amorti de l'air hors de la chambre (20).

7. Dispositif d'actionnement d'un générateur de pression de frein pour véhicule automobile, constitué d'une pédale d'actionnement disposée de façon à pouvoir basculer et d'une tige d'actionnement articulée sur celle-ci, **caractérisé en ce que** la pédale d'actionnement (30) est constituée de deux parties (23, 24) reliées l'une à l'autre au moyen d'une liaison articulée (25) et la tige d'actionnement (40) est articulée sur la première partie (23) montée d'une manière rotative, et **en ce qu'**il est prévu un tirant (26) qui est relié à la seconde partie (24) dans la zone de la transmission de forces d'actionnement au moyen d'une seconde liaison articulée (27) et dont l'autre extrémité peut être déplacée en translation, au moyen de l'amorçage d'une charge explosive (31), le long d'un guidage (28) fixé à demeure à la première partie (23).

8. Dispositif suivant la revendication 7, **caractérisé en ce que** l'extrémité du tirant (26) peut être déplacée en translation à l'encontre de la force d'un ressort de compression (29).

9. Dispositif de freinage comportant un générateur de pression de frein et un dispositif d'actionnement du générateur de pression de frein suivant l'une des revendications 1 à 8, **caractérisé en ce que** le générateur de pression de frein est un amplificateur de force de freinage pneumatique.

10. Dispositif de freinage comportant un générateur de pression de frein et un dispositif d'actionnement du générateur de pression de frein suivant l'une des revendications 1 à 8, **caractérisé en ce que** le générateur de pression de frein est un amplificateur de force de freinage hydraulique.

11. Dispositif de freinage comportant un générateur de pression de frein et un dispositif d'actionnement du générateur de pression de frein suivant l'une des revendications 1 à 8, **caractérisé en ce que** le générateur de pression de frein est un maître-cylindre de frein hydraulique.

12. Dispositif de freinage comportant un générateur de pression de frein et un dispositif d'actionnement du générateur de pression de frein suivant l'une des revendications 1 à 8, **caractérisé en ce que** le générateur de pression de frein est un cylindre émetteur d'embrayage hydraulique.
